# EUROPEAN PATENT SPECIFICATION

(11) **EP 2 388 874 B1**
(45) Date of publication and mention of the grant of the patent: **24.12.2014**
(21) Application number: 11166716.8
(22) Date of filing: 19.05.2011
(51) Int. Cl.: H02G 3/14

(54) **Fastening part for fastening a cover plate to a junction box**
Befestigungsteil zum befestigen eine Abdeckplatte zu eine Verteilerkasten
Elément de fixation pour fixer une plaque de couverture sur un boîtier de jonction

(30) Priority: 19.05.2010 FI 20105547
(43) Date of publication of application: 23.11.2011
(73) Proprietor: Schneider Electric Finland Oy, 02650 Espoo (FI)
(72) Inventor: Lindroos, Kaj, FI-07955, Tesjoki (FI); Matiskainen, Mikko, FI-07970, Ruotsinpyhtää (FI); Riuttala, Raimo, FI-47200, Elimäki (FI)
(74) Representative: Berggren Oy Ab

(56) References cited:
- EP-A1- 0 571 723
- EP-A2- 1 944 835
- DE-A1- 3 145 103
- DE-A1-102007 034 394
- DE-B- 1 177 709

## Description

The invention relates to an attachment element as set forth in the preamble of claim 1 for securing a cover plate to the engagement with a junction box assembly.

The invention relates also to a junction box assembly as set forth in the preamble of claim 10.

The invention further relates to a cover plate attachment system as set forth in the preamble of claim 15.

In the building construction process, a junction box is most often embedded in structural elements, such as a wall, and inside the junction box is fitted a desired electrical instrument, such as an electrical switch or a motion detector, to which box are connected electrical wires or other respective conductors run inside the structural elements. A cover plate is attached on top of the junction box and the instrument and secured to an outer surface of the structural element. The cover plate is dimensionally larger than a junction box hole provided in structural elements. The cover plate is used for concealing a boundary area between the junction box and the wall, for protecting the electrical instrument, and for isolating the electrical instrument from the environment. The cover plate has an opening in its middle section for protruding parts of the electrical instrument, such as for a lever system of the electrical switch or sensors of the motion detector. Hence, e.g. one or more toggles of an electrical switch are provided in the cover plate opening.

EP 0 571 723 discloses an attachment element for securing a cover plate to a junction box. The attachment element comprises a frame and a number of retainers by means of which the attachment element, jointly with the cover plate, can be secured to the junction box. Each retainer is a J-shaped member and which retainer is fixed by the curved portion to the attachment element's frame, and which stem portion is provided with a number of successive protrusive clamping elements which are compatible with counter clamping elements included in the counter-retainers.

It is prior known that a junction box or an electrical instrument may for one reason or another remain (or end up) in too deep a position relative to the surface of a structural element, such as a wall surface, making the attachment of a cover plate more difficult. Thus, a gap is left between the cover plate and the junction box/electrical instrument, the size of said gap varying on a case-by-case basis. In order to address this problem, there are prior known cover plate attachment systems, wherein the cover plate or its attachment element is provided with a number of retainers, such as retainer prongs, which protrude away from an internal surface of the cover plate and which are disposed at regular intervals on various sides of the opening. In attachment systems, the electrical instrument is provided with counter-retainers, such as retainer recesses, complementary to said retainers. The retainers are provided longitudinally with a tooth system and the retainer recesses of counter-retainers have gripping claws cooperating with the teeth. In the process of securing a cover plate in place, the cover plate is set on top of a junction box and an electrical instrument, the protrusions are fitted in the recesses, the cover plate is pressed against the junction box and electrical instrument, whereby the tooth system of each retainer glides over the gripping claws of a respective counter-retainer until the cover plate reaches most preferably the outer surface of a structural element and the counter-retainer's gripping claw reaches respectively a suitable indentation in the retainer's tooth system and engages therein. This way, the cover plate can be attached essentially to flushness with a structural element regardless of the depth of a junction box and electrical instrument with respect to the structural element's surface.

The foregoing type attachment systems for cover plates have been disclosed, among others, in the Swiss patent publication CH 696899, in the published international patent application WO 2006106552, and in the United States patent publication US 6126296.

A drawback with prior known attachment systems for cover plates is the fact that the retainers, such as retainer prongs, protrude outwards from a cover plate and, moreover, to relatively long distance from the plane of a cover plate. Thus, they are susceptible to damage during storage and/or transport.

Another drawback is that a cover plate provided with this type of protruding retainers will have a considerable height. The prominently protruding retainers require meticulous and precision-demanding handling in the process of securing cover plates in place.

Still another drawback with prior known attachment systems of cover plates is the fact that the dismantling of a cover plate installed in the engagement with a fully embedded junction box and electrical instrument is a laborious process. The retainers of a cover plate attach generally quite strongly to the counter-retainers of an electrical instrument, which even extend quite deeply into the electrical instrument's body element. During the process of dismantling, the retainers of a cover may sustain damage, thus necessitating a replacement of the entire cover plate.

It is an object of the invention to eliminate the drawbacks associated with attachment systems. An object of the invention is to provide a new attachment element for securing a cover plate, a new junction box assembly, and a new cover plate attachment system, which are all based on an attachment element which is simple, reliable and readily attachable to and removable from the engagement with a junction box, especially an embedded junction box, and an electrical instrument fitted therein, and particularly based on retainers of this attachment element.

The attachment element according to the invention is characterized by what is presented in claim 1.

The junction box assembly according to the invention is characterized by what is presented in claim 10.

The cover plate attachment system according to the invention is characterized by what is presented in claim 15.

Preferred embodiments of the invention are presented in the dependent claims.

The attachment element for securing a cover plate to the engagement with a junction box assembly comprises a frame and, as attachment members, a number of retainers by means of which the attachment element, jointly with the cover plate, is to be secured to the junction box assembly, and specifically to counter-retainers provided in connection therewith. According to the invention, each retainer is a J-shaped member, which comprises a first straight stem portion and a curved portion connected to each other, and which retainer is fixed by the curved portion to the attachment element's frame, and which stem portion is provided with a number of successive protrusive clamping elements which are compatible with counter clamping elements included in the counter-retainers.

The cover plate is pressable with the attachment element by an inner edge of the cover plate opening to its position in the engagement with a junction box assembly, especially an embedded junction box assembly, and an electrical instrument fitted therein. The cover plate, along with its attachment element, is also removable from a junction box assembly for inspection and/or a modification of the junction box assembly.

In a preferred embodiment of the invention, the retainers are fixed by the curved portion to an edge of the frame opening at a small distance from each other. The curved portion is explicitly adapted to function as the retainer's flexible element. The retainer is fixed by a first end (or its proximity) of the curved portion to the attachment element, while the first stem portion is integrally affixed to a second end of the curved portion. As a result, the first stem portion is allowed to flex and move in the plane of a retainer, i.e. in the flexure plane, whereby its clamping elements in the engagement process attach effortlessly and effectively to the counter-retainer's counter clamping elements and, respectively, in the disengagement process can be easily detached from the counter clamping elements with the assistance of a suitable tool.

The retainers are most preferably mounted on an attachment element by being fixed to an edge of the attachment element's opening in a direction substantially perpendicular to the plane thereof and at the same time to the plane of a cover plate. As a result, each retainer is allowed to flex in a substantially perpendicular plane, i.e. in said flexure plane, relative to the cover plate and its opening, away from the opening's edge as the attachment element, and thereby the cover plate, is secured by pressing in place, or respectively towards the opening's edge, as the retainers are unclamped with a suitable tool for removing the cover plate.

In a preferred embodiment of the invention, the curved portion of an attachment element's retainer comprises not only an arched part but also a second straight stem portion, whereby each retainer is a U-shaped flexible member. The second stem portion is most preferably shorter than the first one. An advantage is that, by virtue of the second stem portion, the engagement of a retainer can be effected in a reliable manner. The second stem portion reinforces the mounting of a retainer with the attachment element and keeps the retainer's mounting appropriately rigid, preventing thereby a breakdown of the retainer at this location. It should be noted that the attachment element is fabricated from a suitable plastic material, most preferably by injection molding, and the above-described structure is advantageous also in terms of manufacturing engineering.

In a preferred embodiment of the invention, the attachment element's retainers are fixed by the curved portion to an edge of the frame's opening, such that two retainers are side by side in a first edge portion of the opening and two retainers are respectively in matching locations on the other side of the opening in a second edge portion. A particular advantage of this embodiment is that the opposing retainers are in cooperation with each other in such a way that, in the engagement process, the spring forces of the opposing retainers work against each other and thereby increase the clamping power for holding the attachment element, and thereby the cover plate, in the engagement position. Another advantage is easy removability; the attachment element is removable from a junction box assembly with one side retainers and the attachment element's edge at a time.

In a preferred embodiment of the invention, the attachment element has its parallel retainers connected to each other at the free ends of the first stem portions by a cross brace most preferably in a manner that between the stem portions is left an opening. A particular benefit gained by this embodiment is that a disengagement of the attachment element with a tool is simple by making use of the cross brace for prying the first stem portions of parallel retainers off the counter clamping elements of counter-retainers, whereby the attachment element is disengageable one side or edge at a time from the junction box assembly.

In a preferred embodiment of the invention, the first stem portion of an attachment element's retainer has its free end provided with a lateral protrusion, which extends from the first stem portion in the flexure plane. The lateral protrusion is adapted to stop a counter-retainer and to limit the relative motion range of a counter-retainer and a retainer as an attachment element, together with a cover plate, is being mounted in place on a junction box assembly by pressing the attachment element against the junction box assembly.

In a preferred embodiment of the invention, the attachment element is fitted with guide pins, which are adapted to coincide with complementary guide recesses in the junction box assembly. The number of guide pins is preferably at least two and such pins are arranged on various sides of the attachment element's frame, preferably in the corners. The guide pins extend from the attachment element down towards the junction box assembly. A benefit gained by the guide pins is that, by virtue of the same, the attachment element's retainers find their way in the engagement process linearly and reliably to coincide with the counter clamping elements of the counter-retainers.

In a preferred embodiment of the invention, the attachment element is provided with spring components. The spring components are disposed on various sides of the attachment element's frame, preferably in the attachment element's corners. The spring components offer a benefit of pushing in the engagement process the attachment element outwards within the range allowed by clearances provided by the clamping elements and the counter clamping elements and, thus, the attachment element can be fitted securely in place in a junction box assembly.

In a preferred embodiment of the invention, the attachment element is connected with the cover plate in a way to provide an integral entity. Thus, the cover plate encompasses an attachment element and its retainers, each of said retainers being a J-shaped member. It is a benefit that the cover plate in itself contains engagement members with no need for a separate attachment element.

An advantage of the invention is a high flexibility, a good reversibility to the original rest condition, and a durability of the retainers, as well as an economically attractive way of manufacturing the attachment element and its retainers.

An advantage of the invention is also an extensive working range the retainer in the installation direction, because the retainer has particularly its tension and holding force distributed over a long range.

In connection with a junction box assembly of the invention are provided counter-retainers for securing a cover plate by means of an attachment element to the engagement with the junction box assembly by means of the attachment element's retainers fitting in the counter-retainers. According to the invention, each counter-retainer comprises a substantially straight support member, provided with a clamping element in the form of at least one gripping claw or the like, said support member being arranged on a top portion of the junction box assembly and adapted to extend upward from the junction box assembly and the gripping claw being adapted to extend laterally outward from the support member.

A resulting benefit is that the counter-retainers are structurally simple and readily integrable in the fabrication process with a junction box assembly, particularly with an electrical instrument.

In a preferred embodiment of the invention, the counter-retainers of a junction box assembly are, in a plan view, arranged on the sides of a junction box assembly, such as an electrical instrument, at a small distance from each other to be in coincidence with the attachment element's retainers and to fit therein.

In a preferred embodiment of the invention, the counter-retainers of a junction box assembly are arranged respectively on first and second opposing sides of a junction box assembly, such as an electrical instrument, so as to become disposed, in the process of securing a cover plate, at an edge of the frame's opening and in coincidence with the cover plate's respective parallel retainers.

In a preferred embodiment of the invention, the support members of parallel counter-retainers feature a wall in association therewith. An advantage gained by such a wall is its ability to provide a good and approximate support surface for an appropriate tool whenever the attachment element, and a cover plate along with it, is to be dismantled from the engagement with the junction box assembly.

In a preferred embodiment of the invention, the parallel counter-retainers of a junction box assembly are secured to, most preferably integrated with the wall by their support members over one of their long vertical sides. A resulting benefit is that the counter-retainers are thereby made simple in design, manufacturing friendly, and, at the same time, readily connectable with a junction box assembly.

The cover plate attachment system according to the invention enables securing a cover plate to a junction box assembly, said attachment system comprising an attachment element for securing a cover plate to the engagement of a junction box assembly, said attachment element comprising, as attachment members, a number of retainers by means of which it is to be secured to the junction box assembly and particularly to counter-retainers provided in connection therewith. According to the invention, the attachment element, along with its retainers, is constructed in one of the above-described manners (cf. claims 1-9), and the junction box assembly, particularly its counter-retainers, is constructed in one of the above-described manners (cf. claims 10-14).

An advantage of the invention is a possibility of implementing a cover plate attachment system, and an attachment element and a junction box assembly associated therewith, in relatively low profile designs.

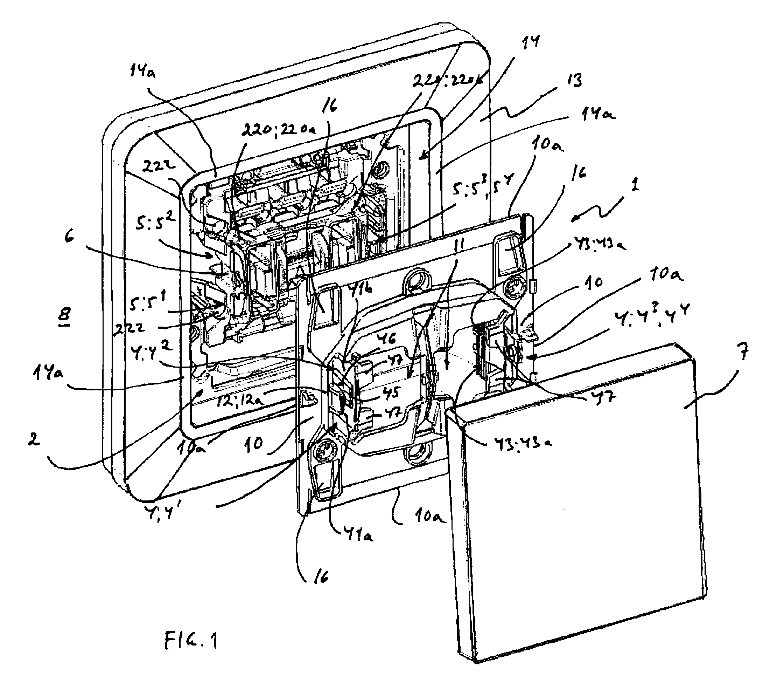

The invention will now be described in more detail with reference to the accompanying drawing, in which
- fig. 1: shows illustratively a perspective view of a junction box assembly of the invention in a dismounted condition, having in association therewith an attachment element and cover plate of the invention, all of these jointly constituting a cover plate attachment system of the invention;
- fig. 2: shows a lateral section view of the junction box assembly, the attachment element, and the cover plate attachment system of fig. 1 which is illustratively dismounted into reassemblable parts;
- fig. 3: shows a lateral section view of a cover plate attachment system, displaying also a junction box assembly and attachment element of the invention; and

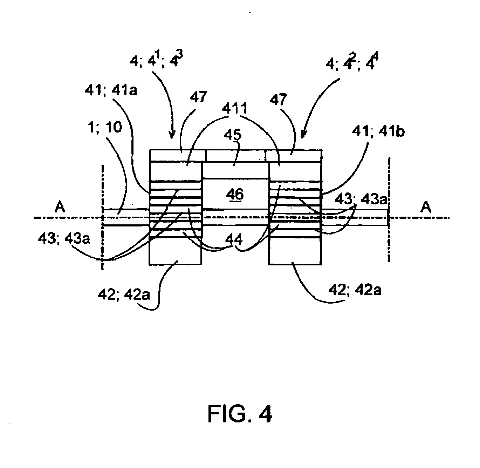

- fig. 4: shows a front view of two parallel retainers applied in one preferred attachment element.

In the figures, like elements are designated with like reference numerals.

A cover plate 13 is intended for the engagement with a junction box assembly 2, especially with an embedded type junction box, as clearly depicted in the figures. The cover plate 13 is mounted by means of an attachment element 1 removably in place on the junction box assembly 2. the attachment element 1 comprises a frame 10 and, as engagement members, a number of retainers 4 by means of which the attachment element, jointly with the cover plate, is to be fixed to the junction box assembly and particularly to counter-retainers 5 provided in association therewith.

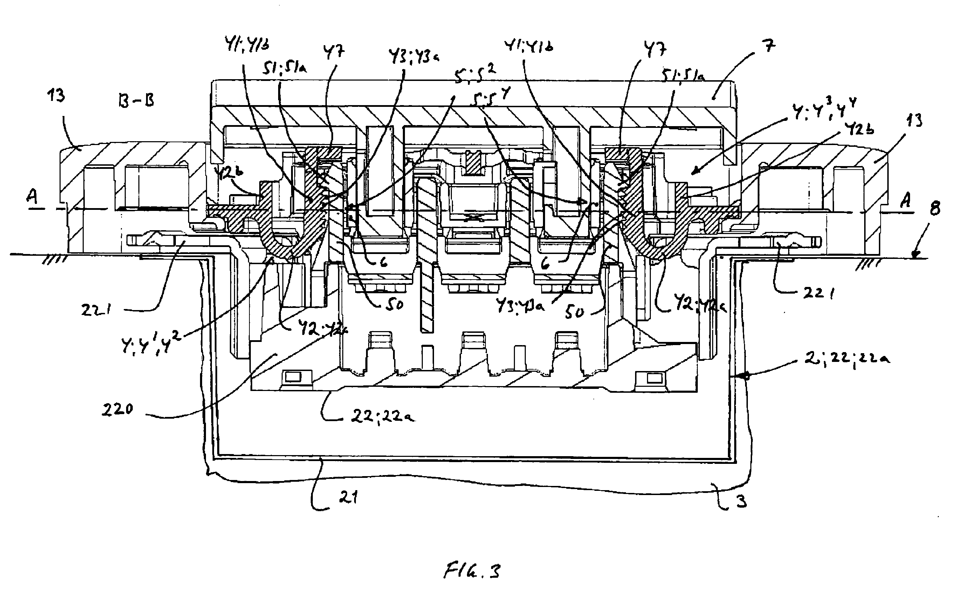

In this context, the term embedded type junction box assembly 2 is used in reference to a combination of one or more electrical switches 22a or the like electrical instruments 22 to be fitted in a junction or electrical box 21 for embedded type installation in a wall 8 or the like structure (cf. fig. 3).

During a construction process, the junction box 21 is embedded in an installation hole 3 provided inn structures, such as the wall 8, and in the junction box is fitted a desired electrical instrument 22, such as the electrical switch 22a or a socket-outlet, with electrical wires brought along inside the structures being connected to said outlet. The cover plate 13 is fixed on top of the junction box and electrical instrument 21, 22 and secured to an external structural surface, such as the wall 8. In terms of its width and length, the cover plate 13 is larger than the diameter of a junction box installation hole. The cover plate conceals a boundary area between the junction box and the wall, protects the electrical instrument, and isolates it from the environment. The cover plate has in its middle section an opening for protruding parts of the electrical instrument. Hence, for example, one or more connectors of the electrical switch 22a are arranged in the cover plate's opening. Once the cover plate 13 has been mounted, a touch pad 7 of the electrical switch 22a is fixed in place. Alternatively, the attachment element 1 and the touch pad 7 are secured to each other and fitted in an opening 14 of the cover plate 13 before mounting the entire assembled package on top of the electrical switch 22a. This alternative speed up an installation process.

The cover plate 13 is to be pressed with the attachment element 1, specifically with an outer edge 10a of the frame 10, at an inner edge 14a of the cover plate's opening 14 to its position in engagement with the junction box assembly 2, particularly with the embedded junction box 21 and the electrical instrument 22, 22a fitted therein.

According to the invention, each retainer 4 of the attachment element 1 is a J-shaped flexible member, which comprises a first straight stem portion 41 and a curved portion 42 connected to each other. The retainer 4 is fastened by the curved portion 42 to the attachment element's 1 frame 10. The retainer 4 is adapted to flex in a plane of the letter J, i.e. in a plane B-B of the first stem portion 41 and the curved portion 42, which is referred in this context as a flex plane. Each retainer 4 is allowed to flex in the plane B-B substantially perpendicular to the cover plate 1 and its opening 10, i.e. in the flex plane, towards (opening with a tool) or away from (pressing in place and attachment) the opening's edge.

The retainer 4 has its curved portion 42 extending, in the most preferred embodiment of the invention depicted in the drawings, below a plane A-A defined by the cover plate and the attachment element, while the first stem portion 41, especially its free end 411, rises above this plane.

The first stem portion 41 is provided with a number of successive protrusive clamping elements 43, 43a, which are compatible with counter clamping elements 51; 51 a, 51 b included in counter-retainers 5. The protrusive clamping elements 43 are provided on an outward (i.e. away from an edge 12 of the attachment element's opening 11) facing surface of the stem portion 41 and at small distances in succession and alternately with successive grooves 44 in its longitudinal direction. The protrusive clamping elements 43 are preferably wedge-shaped teeth 43a, ridges or the like. The clamping elements 43; 43a of the retainer 4 are compatible with the counter clamping elements 51 of the counter-retainers 5.

The counter-retainers 5 are provided in association with the junction box assembly 2; 21, 22 of the invention. Each counter-retainer 5 comprises a substantially straight support portion 50 which, as a counter clamping element 51, includes at least one claw 51 a or the like ridge or tooth. The support portion 50 is preferably a rectangle in cross-section, on one of the straight sides of which the counter clamping element (or elements) 51; 51 a is provided. The claw 51 a is a horizontal and relatively broad wedge-shaped element, which lies at a suitable elevation for its reliable cooperation with the teeth 43a and the grooves 44 of the retainer's 4 clamping elements 43 in an engagement condition of the attachment element 1 and the cover plate 13.

Each counter-retainer 5 is arranged in an upper part of the junction box assembly 2 and to extend upward and outward from the electrical instrument 22; 22a. It is beneficial to include the counter-retainer 5 in an upper part of the electrical instrument's body segment 220 or in an attachment frame 221 of the electrical instrument to make an integral component thereof. The counter clamping element 51, such as one or more claws 51 a, is directed laterally outward from the junction box assembly 2, such as from the electrical instrument 22; 22a and its body segment 220, and in such a way that, in an engagement condition, it lies in coincidence with the respective clamping element 43; 43a, 44 of the attachment element's 1 retainer 4.

In a preferred embodiment of the invention, the retainers 4 are affixed by the curved portion 42; 42b to the edge 12 of the opening 11 in the frame 10 at a small distance from each other. The counter clamping elements 51 of the counter-retainers 5 are provided at matching locations in the junction box assembly 2, such as in the body segment 220 of the electrical instrument 22; 22a.

In a preferred embodiment of the invention, the curved portion 42 of the attachment element's 1 retainer comprises, in addition to the arching portion 42a, a second stem portion 42b, each retainer thus being a U-shaped flexible member. Hence, the retainer 4 is adapted to flex in the plane B-B of letter U, which thus merges with the plane of letter J shown in the foregoing embodiment of the retainer 4. This second stem portion 42b is preferably a straight stem portion. The retainer 4 is most preferably affixed to the attachment element's frame 10 at a joint area of the arching portion 42a and the second stem portion 42b. Thus, the second stem portion 42b continues beyond the joint area and its free end extends above the basic plane A-A of the frame 10. Still, the second stem portion 42b is shorter than the first one 41. The first stem portion 41 its free end 411 rising higher above the plane A-A than the second stem portion's free end. The second stem portion supports the attachment point of the retainer 4 and the frame 10 and the entire joint area. This way, it keeps the attachment point of the retainer 4 appropriately rigid, thus preventing the structure from fracturing at this point.

It should be noted that the attachment element 1 is fabricated in a single piece from a suitable plastic material, most preferably by injection molding, and the above-described structure is favorable also in terms manufacturing engineering.

In a preferred embodiment of the invention, the retainers 4 are fixed by the curved portion 42; 42b to an edge of the opening 11 in the frame 10 in a manner that two retainers 4¹, 4² are in a parallel relationship in a first edge portion 12a of the opening 11 and, respectively, two retainers 4³, 4⁴ at matching locations in a second edge portion 12b on the other side of the opening. In the engaging process, the opposing retainers 4¹, 4³; 4², 4⁴ are in collaboration with each other as the retainers' surfaces with the clamping elements 43; 43a are in alignment towards each other. The spring forces of the opposing retainers work against each other and hence increase a holding force for maintaining the attachment element 1 and thereby the cover plate 13 in the engaged position.

In a preferred embodiment of the invention, the parallel retainers 4; 4¹, 4²; 4³, 4⁴ are connected with each other at the free ends 411 of the first stem portions 41; 41 a, 41 b by means of a cross brace 45. It is further beneficial that between the stem portions 41; 41 a, 41 b below the cross brace be left an opening 46. Disengagement of the retainers 4 from the counter-retainers 5 for removing the attachment element 1 from the junction box assembly 2 is thus effected with a tool, such as a flat head screwdriver, simply by inserting the flat tool head into the opening 46 and by making use of the cross brace 47 for prying the first stem portions 41; 41 a, 41 b of the parallel retainers 4 off the counter clamping elements 51; 51 a of the counter-retainers 5. The attachment element 1 is disengageable one side or edge of the frame 10 at a time from the junction box assembly 2.

In a preferred embodiment of the invention, the first stem portion 41; 41 a, 41 b of the retainer 4; 4¹, 4²; 4³, 4⁴ has its free end 411 provided with a lateral protrusion 47, which extends from the first stem portion and at the same time from the retainer's plane B-B out towards the opening 11 in the frame 10. The lateral protrusion 47 is adapted to limit and stop the counter-retainer 5, especially the support portion 50, from sliding and moving lengthwise of the retainer 4 and its first stem portion 41.

In a preferred embodiment of the invention, the attachment element 1 is provided with guide pins 15, which are adapted to coincide with respective guide recesses 222 in the junction box assembly 2. The number of guide pins 15 is preferably at least two and such pins are arranged on various sides of the attachment element's frame 10, preferably in the corners. The guide pins 15 protrude from the attachment element and its frame 10 downward onto the side of the junction box assembly 2. The guide pins 15 enable directing the attachment element's retainers 4 linearly and reliably to coincide with the counter clamping elements 51; 51 a, 51 b of the counter-retainers 5.

In a preferred embodiment of the invention, the attachment element 1, and especially the frame 10, is provided with spring components 16, which protrude downward from the attachment element's plane A-A and in the engaging process towards the junction box assembly 2. These spring components 16 are preferably provided in the form of flexible inclined tabs, most preferably disposed in the corners of the frame 10. In the engaging process, the spring components 16 are pushing the attachment element 1 outwards and away from the junction box assembly 2 within the limits of clearances provided by the retainers 4 and the counter-retainers 5 and, this way, the attachment element 1 and the cover plate 13 can be fitted immovably in place on the junction box assembly.

In one embodiment of the invention, the attachment element 1 is connected with the cover plate 13 so as to constitute an integral entity. In this case, the cover plate incorporates an attachment element and its retainers 4, each of said retainers being a J-shaped or optionally U-shaped member. Thus, the cover plate contains in itself attachment members with no need for a separate attachment element.

The invention relates also to a junction box assembly 2, in connection with which are provided counter-retainers 5 for securing a cover plate 13 by means of an attachment element 1 to the engagement with the junction box assembly 2; 21, 22 by means of retainers 4 included in the attachment element 1 and compatible with the counter-retainers 5. In the junction box assembly 2 according to the invention, each counter-retainer 5; 5¹, 5², 5³, 5⁴ comprises a substantially straight support portion 50, including as a clamping element 51 at least one gripping claw 51 a or the like. The counter-retainers 5; 5¹, 5², 5³, 5⁴ are arranged in an upper part of a body segment 220 of the junction box assembly 2, preferably an electrical instrument 22; 22a, or in an attachment frame 221 thereof. The counter-retainer 5 is most preferably constructed as an integral entity with a body segment or attachment frame of the junction box assembly 2, preferably an electrical instrument, e.g. by injection molding from a suitable plastic raw material. The support portion 50 of the counter-retainer 5 is most preferably a straight stem portion, which is preferably a rectangle in cross-section. With respect to a horizontal direction, i.e. lengthwise of the support portion 50, the clamping elements 51 are relatively wide, i.e. equal to the width of the support portion. The clamping element (or elements) 51 is arranged integrally as a part of the support portion 50 at a suitable elevation and to extend laterally outward from the support portion. The counter-retainer 5 has its support portion 50 extending upward and outward from the junction box assembly, especially from the body segment 220 of the electrical instrument 22; 22a.

In a preferred embodiment of the invention, the junction box assembly's counter-retainers 5; 5¹, 5², 5³, 5⁴ are arranged on the sides of the body segment 220 of the junction box assembly 2, especially the electrical instrument 22; 22a, at a small distance from each other so as to coincide in the engaging process with the respective retainers 4; 4¹, 4²; 4³, 4⁴ of the attachment element 1 and to fit therein.

In a preferred embodiment of the invention, the counter-retainers 5; 5¹, 5², 5³, 5⁴ are arranged on a first 220a and respectively on a second side 220b of the body segment 220 of the junction box assembly 2, such as the electrical instrument 22; 22a, two in parallel at a small distance from each other so as to become arranged, in the process of fixing the cover plate 13, at an edge of the opening 11 in the frame 10 and, in the engaging process, coincident with the cover plate's respective retainers 4; 4¹, 4²; 4³, 4⁴.

It is further beneficial that behind and preferably also between the junction box assembly's parallel counter-retainers 5; 5¹, 5²; 5³, 5⁴ is a wall 6 substantially co-directional with the support portions 50 of the counter-retainers 5. This wall 6 provides a useful and proximal support surface for a suitable tool whenever the attachment element 1, and the cover plate 13 along with it, is to be removed from the engagement with the junction box assembly 2.

In a preferred embodiment of the invention, the parallel counter-retainers 5¹, 5²; 5³, 5⁴ of the junction box assembly are affixed, preferably integrated, with the wall 6 by their support portions 50 over one of the long vertical sides thereof. Hence, the support portions 50 and the wall constitute an integral entity, which is e.g. a part of the electrical instrument's 22; 22a body segment 220.

The invention relates also to a cover plate attachment system. Thereby, a cover plate 13 is capable of being secured to a junction box assembly 2, especially to an embedded junction box assembly. The cover plate attachment system comprises an attachment element 1 for securing the cover plate 13 to the engagement with the embedded junction box assembly 2. The attachment element 1 comprises, as attachment members, a number of retainers 4, by means of which it is to be secured to the junction box assembly 2 and particularly to counter-retainers 5 provided in connection therewith. According to the invention, the attachment element 1, along with its retainers 4; 4¹, 4²; 4³, 4⁴, is constructed as set forth in reference to any of the above-described attachment elements of the invention (cf. claims 1-9), and the junction box assembly 2, along with its counter-retainers 5; 5¹, 5²; 5³, 5⁴, is constructed as set forth in reference to any of the above-described junction box assembles of the invention (cf. claims 10-14).

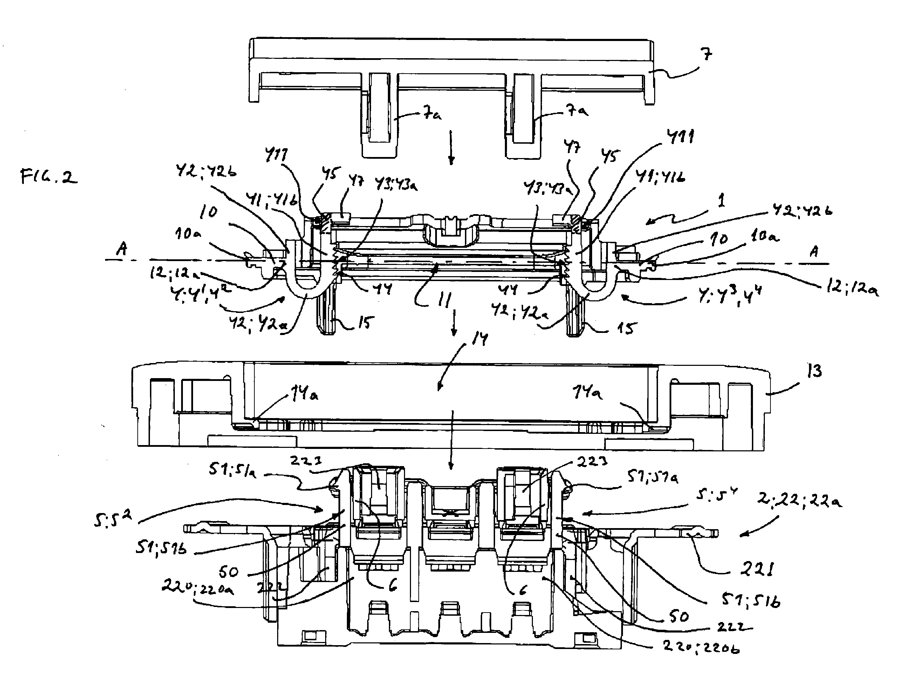

When the cover plate is attached to the junction box assembly 2, the attachment element 1 is fitted in the cover plate's opening 14 and the attachment element's retainers 4; 4¹, 4²; 4³, 4⁴ and the junction box assembly's 2 counter-retainers 5; 5¹, 5²; 5³, 5⁴ are set in alignment by means of the guide pins 15 and the guide recesses 222 (cf. fig. 2), after which the attachment element 1 is pressed against the junction box assembly 2. The gripping claw 51 a of each counter-retainer 5 glides along the surface of a respective flexible retainer's 4 first stem portion 41 and along protrusive clamping elements 43; 43a therein and grooves 44 between the latter, and the gripping claw 51 a proceeds from a groove 44 between the clamping elements 43; 43a over one clamping element into the next groove until reaching a groove between the clamping elements 43; 43a or a point, at which the cover plate and the attachment element 1 have become pressed essentially against a mounting surface 8, such as a wall or ceiling. The gripping claw 51 a is a type of counter-retainer 5 that is capable of moving in just one direction, i.e. in the above-described engaging direction. The gripping claw 51 a secures the J-shaped or suchlike retainer 4 of the attachment element firmly in place once the attachment element 1 has been pressed against the junction box assembly. The gripping claw 51 a is not able to slide back from the groove 44 over the tooth 43a in a way to bring the attachment element 1 and the junction box assembly 2 apart from each other. the disengagement requires a tool, preferably a flat head screwdriver or the like, by means of which the J-shaped retainer 4, specifically the tooth 43a and the groove 44, is bent in the flex plane B-B off the gripping claw 51 a, whereby the attachment element 1, as far as this retainer 4 is concerned, has been disengaged and released. One all retainers 4 have been released from the counter-retainers, the attachment element 1 and the cover plate 13 are disengageable from the junction box assembly 2. When the cover plate 13 has been installed on the junction box assembly 2, such as an electrical switch, a touch pad 7 (or an equivalent control and/or monitor panel element for the junction box assembly) of the electrical switch 22a is installed in place by pressing it from attachment tabs 7a into attachment recesses 223 of the body segment 220.

The invention is not limited merely to concern the foregoing exemplary embodiment, but a multitude of modifications are possible while staying within the scope of an inventive concept as defined in the claims.

## Claims

1. An attachment element (1) for securing a cover plate (13) to the engagement with a junction box assembly (2), said attachment element (1) comprising a frame (10) and, as attachment members, a number of retainers (4) by means of which the attachment element, jointly with the cover plate, is securable to the junction box assembly comprising counter-retainers (5), **characterized in that** each retainer (4; 4¹, 4², 4³, 4⁴) comprises a first straight stem portion (41) and a flexible portion (42) connected to each other, wherein each retainer (4) is fixed by the flexible portion (42) to an edge of an opening (11) in the frame (10) in such a way that two retainers (4¹, 4²) are in a parallel relationship in a first edge portion (12a) of the opening (11) and, respectively, two retainers (4³, 4⁴) are at matching locations in a second edge portion (12b) on the other side of the opening, wherein the parallel retainers (41, 42; 43, 44) are connected to each other at free ends (411) of the first stem portions (41; 41 a, 41 b) by a cross brace (45), and wherein the stem portion (41) is provided with a number of successive protrusive clamping elements (43; 43a) being compatible with counter clamping elements (51; 51 a, 51 b) included in the counter-retainers (5).

2. An attachment element according to claim 1, **characterized in that** the retainers (4) are fixed by the flexible portion (42; 42b) to an edge (12) of an opening (11) in the frame (10) at a distance from each other.

3. An attachment element according to claim 1 or 2, **characterized in that** the flexible portion (42) comprises, in addition to an arching portion (42a), a second straight stem portion (42b), each retainer thus being a U-shaped flexible member.

4. An attachment element according to claim 1 or 2, **characterized in that** the first straight stem portion (41) and the flexible portion (42) forms a J-shaped flexible member.

5. An attachment element according to any of the preceding claims, **characterized in that** an opening (46) is arranged between the stem portions, said cross brace and opening being intended for disengaging the retainers from the counter-retainers by means of a tool.

6. An attachment element according to any of the preceding claims, **characterized in that** the retainer's (4; 4¹, 4²; 4³, 4⁴) first stem portion (41) has its free end (411) provided with a lateral protrusion (47), which protrudes from the retainer and the first stem portion in a flex plane (B-B).

7. An attachment element according to any of the preceding claims, **characterized in that** the attachment element (1) is provided with guide pins (15), which in the engaging process are adapted to coincide with respective guide recesses (222) in the junction box assembly.

8. An attachment element according to any of the preceding claims, **characterized in that** the attachment element (1) is provided with spring components (16).

9. An attachment element according to any of the preceding claims, **characterized in that** the attachment element (1) is connected to the cover plate (11) in a manner to constitute an integral entity.

10. A junction box assembly (2; 21, 22) comprising counter-retainers (5) for securing a cover plate (13) by means of an attachment element (1) to the engagement with the junction box assembly by means of retainers (4) included in the attachment element (1) and being compatible with the counter-retainers (5), **characterized in that** each counter-retainer (5; 5¹, 5², 5³, 5⁴) comprises a straight support portion (50), including as a clamping element (51) at least one gripping claw (51 a), said support portion (50) being arranged in an upper part of the junction box assembly (2), such as an electrical instrument (22; 22a), and to extend upward therefrom, and said gripping claw (51 a) being adapted to extend laterally outward from the support portion, and wherein the counter-retainers (5) are arranged on a first (220a) and respectively on a second side (220b) of the junction box assembly (2), such as the electrical instrument (22; 22a), two in parallel (51, 52; 53, 54) at a distance from each other so as to become arranged, in the process of fixing the cover plate (13), at an edge of an opening (11) in a frame (10) and coincident with the cover plate's parallel retainers (41, 42; 43, 44), and in connection with the support portions (50) of the parallel counter-retainers (51, 52; 53, 54) is a wall (6)..

11. A junction box assembly according to claim 10, **characterized in that** the counter-retainers (5; 5¹, 5², 5³, 54⁴) are in a plan view arranged on the sides of the junction box assembly (2), such as the electrical instrument (22; 22a), at a distance from each other so as to coincide in the engaging process with the respective retainers (4; 4¹, 4²; 4³, 4⁴) of the attachment element (1) and to fit therein.

12. A junction box assembly according to any of the preceding claims, **characterized in that** the parallel counter-retainers (5¹, 5²; 5³, 5⁴) are affixed, preferably integrated, with the wall (6) by their support portions (50) over one of the long vertical sides thereof.

13. A cover plate attachment system, which enables securing a cover plate (13) to a junction box assembly (2), said attachment system comprising an attachment element (1) for securing the cover plate (13) to the engagement with the junction box assembly (2), said attachment element (1) comprising, as attachment members, a number of retainers (4), by means of which it is to be secured to the junction box assembly (2) and to counter-retainers (5) provided in connection therewith, **characterized in that** the attachment element (1), along with its retainers (4; 4¹, 4²; 4³, 4⁴), is constructed as set forth in any of the preceding claims 1-9, and the junction box assembly (2), particularly its counter-retainers (5; 5¹, 5²; 5³, 5⁴), is constructed as set forth in any of the preceding claims 10-12.

14. A method for disengaging the attachment element of claims 1-9 from the junction box assembly comprising of claims 10-13 , **characterized in that** the method comprises
- prying a tool against the cross brace (47) causing the first stem portion (41; 41 a, 41 b) to disengage from the counter clamping elements (51; 51 a).

15. A method according to claim 14, **characterized in that** the tool is inserted into the opening (46) within the attachment element (1) for prying.

## Patentansprüche

1. Befestigungselement (1) zum Sichern einer Abdeckplatte (13) zum Eingriff mit einer Verteilerkastenanordnung (2), das Befestigungselement (1) umfassend, einen Rahmen (10) und, als Befestigungselemente, eine Anzahl von Haltern (4) mittels derer das Befestigungselement gelenkig mit der Abdeckplatte an die Verteilerkastenanordnung sicherbar ist, welche Gegenhalter (5) umfasst, **dadurch gekennzeichnet, dass** jeder Halter (4; 4¹, 4², 4³, 4⁴) einen ersten geraden Schaftabschnitt (41) und einen flexiblen Abschnitt (42), welche miteinander verbunden sind, umfasst, wobei jeder Halter (4) durch den flexiblen Abschnitt (42) derart an einen Rand einer Öffnung (11) in dem Rahmen (10) befestigt ist, dass zwei Halter (4¹, 4²) in einem ersten Randbereich (12a) der Öffnung (11) in einer parallelen Beziehung sind und jeweils zwei Halter (4³, 4⁴) in passenden Anordnungen in einem zweiten Randbereich (12b) auf der anderen Seite der Öffnung sind, wobei die parallelen Halter (41, 42; 43, 44) an freien Enden (411) der ersten Schaftabschnitte (41; 41 a, 41 b) durch eine Querklammer (45) miteinander verbunden sind, und wobei der Schaftabschnitt (41) mit einer Anzahl von aufeinanderfolgenden vorstehenden Klemmelementen (43; 43a) versehen ist, welche mit in den Gegenhaltern (5) umfassten Gegenklemmelementen (51; 51 a, 51 b) kompatibel sind.

2. Befestigungselement nach Anspruch 1, **dadurch gekennzeichnet, dass** die Halter (4) durch den flexiblen Abschnitt (42; 42b) an einen Rand (12) einer Öffnung (11) in dem Rahmen (10) in einem Abstand voneinander befestigt sind.

3. Befestigungselement nach Anspruch 1 oder 2, **dadurch gekennzeichnet, dass** der flexible Abschnitt (42), zusätzlich zu einem Bogenabschnitt (42a), einen zweiten geraden Schaftabschnitt (42b) umfasst, wobei jeder Halter daher ein U-förmiges flexibles Element ist.

4. Befestigungselement nach Anspruch 1 oder 2, **dadurch gekennzeichnet, dass** der erste gerade Schaftabschnitt (41) und der flexible Abschnitt (42) ein J-förmiges flexibles Element bilden.

5. Befestigungselement nach einem der vorhergehenden Ansprüche, **dadurch gekennzeichnet, dass** eine Öffnung (46) zwischen den Schaftabschnitten angeordnet ist, wobei die Querklammer und die Öffnung zum Lösen der Halter von den Gegenhaltern mittels eines Werkzeugs bestimmt ist.

6. Befestigungselement nach einem der vorhergehenden Ansprüche, **dadurch gekennzeichnet, dass** das freie Ende (411) des ersten Schaftabschnitts (41) des Halters (4; 4¹, 4²; 4³, 4⁴) mit einem seitlichen Vorsprung (47) versehen ist, welcher von dem Halter und dem ersten Schaftabschnitt in einer Biegungsebene (B-B) vortritt.

7. Befestigungselement nach einem der vorhergehenden Ansprüche, **dadurch gekennzeichnet, dass** das Befestigungselement (1) mit Führungsstiften (15) versehen ist, welche in dem Eingriffsvorgang dazu angepasst sind, mit entsprechenden Führungsausnehmungen (222) in der Verteilerkastenanordnung übereinzustimmen.

8. Befestigungselement nach einem der vorhergehenden Ansprüche, **dadurch gekennzeichnet, dass** das Befestigungselement (1) mit Federkomponenten (16) versehen ist.

9. Befestigungselement nach einem der vorhergehenden Ansprüche, **dadurch gekennzeichnet, dass** das Befestigungselement (1) mit der Abdeckplatte (11) in einer Weise verbunden ist, um eine integrale Einheit darzustellen.

10. Verteilerkastenanordnung (2; 21, 22), umfassend, Gegenhalter (5) zum Sichern einer Abdeckplatte (13) mittels eines Befestigungselements (1) zum Eingriff mit der Verteilerkastenanordnung mittels Haltern (4), welche in dem Befestigungselement (1) umfasst sind und welche mit den Gegenhaltern (5) kompatibel sind, **dadurch gekennzeichnet, dass** jeder Gegenhalter (5; 5¹, 5², 5³, 5⁴) einen geraden Halterungsabschnitt (50) umfasst, welcher als ein Klemmelement (51) wenigstens eine Greifklaue (51a) umfasst, wobei der Halterungsabschnitt (50) in einem oberen Teil der Verteilerkastenanordnung (2), wie beispielsweise einem elektrischen Instrument (22; 22a), angeordnet ist und dazu, sich davon nach oben zu erstrecken, und wobei die Greifklaue (51a) dazu angepasst ist, sich seitwärts nach außen von dem Halterungsabschnitt zu erstrecken, und wobei die Gegenhalter (5) an jeweils einer ersten (220a) und einer zweiten Seite (220b) der Verteilerkastenanordnung (2), wie beispielsweise dem elektrischen Instrument (22; 22a), je zwei parallel zueinander (51, 52; 53, 54) in einem Abstand voneinander angeordnet sind, sodass sie, in dem Befestigungsvorgang der Abdeckplatte (13), an einem Rand einer Öffnung (11) in einem Rahmen (10) und übereinstimmend mit den parallelen Haltern (41, 42; 43, 44) der Abdeckplatte angeordnet werden, und in Verbindung mit den Halterungsabschnitten (50) der parallelen Gegenhalter (51, 52; 53, 54) ist eine Wand (6).

11. Verteilerkastenanordnung nach Anspruch 10, **dadurch gekennzeichnet, dass** die Gegenhalter (5; 5¹, 5², 5³, 54⁴) in einer Draufsicht an den Seiten der Verteilerkastenanordnung (2), wie beispielsweise dem elektrischen Instrument (22; 22a), in einem Abstand voneinander angeordnet sind, sodass sie in dem Eingriffsvorgang mit den entsprechenden Haltern (4; 4¹, 4²; 4³, 4⁴) des Befestigungselements (1) übereinstimmen und dort hinein passen.

12. Verteilerkastenanordnung nach einem der vorhergehenden Ansprüche, **dadurch gekennzeichnet, dass** die parallelen Gegenhalter (5¹, 5²; 5³, 5⁴) an der Wand (6) durch ihre Halterungsabschnitte (50) über eine der langen vertikalen Seiten davon befestigt sind, vorzugsweise integriert sind.

13. Abdeckplattenbefestigungssystem, welches ermöglicht, eine Abdeckplatte (13) an eine Verteilerkastenanordnung (2) zu sichern, wobei das Befestigungssystem ein Befestigungselement (1) zum Sichern der Abdeckplatte (13) zum Eingriff mit der Verteilerkastenanordnung (2) umfasst, wobei das Befestigungselement (1), als Befestigungselemente, eine Anzahl von Haltern (4) umfasst, mittels derer es an die Verteilerkastenanordnung (2) und an in Verbindung damit vorgesehene Gegenhalter (5) zu sichern ist, **dadurch gekennzeichnet, dass** das Befestigungselement (1), zusammen mit seinen Haltern (4; 4¹, 4²; 4³, 4⁴), wie in einem der vorhergehenden Ansprüche 1 - 9 ausgeführt konstruiert ist, und die Verteilerkastenanordnung (2), insbesondere deren Gegenhalter (5; 5¹, 5²; 5³, 5⁴) wie in einem der vorhergehenden Ansprüche 10 - 12 ausgeführt konstruiert ist.

14. Verfahren zum Lösen des Befestigungselements der Ansprüche 1 - 9 von der von den Ansprüchen 10 - 13 umfassten Verteilerkastenanordnung, **dadurch gekennzeichnet, dass** das Verfahren umfasst
- Stemmen eines Werkzeugs gegen die Querklammer (47), um den ersten Schaftabschnitt (41; 41 a, 41 b) zu veranlassen, sich von den Gegenklemmelementen (51; 51 a) zu lösen.

15. Verfahren nach Anspruch 14, **dadurch gekennzeichnet, dass** das Werkzeug in die Öffnung (46) innerhalb des Befestigungselements (1) zum Stemmen eingebracht wird.

## Revendications

1. Elément de fixation (1) pour fixer une plaque de couverture (13) pour la mettre en prise avec un ensemble boîtier de jonction (2), ledit élément de fixation (1) comprenant un cadre (10) et, en tant qu'organes de fixation, un certain nombre de dispositifs de retenue (4) au moyen desquels l'élément de fixation, conjointement avec la plaque de couverture, peut être fixé à l'ensemble boîtier de jonction comprenant des contre-dispositifs de retenue (5), **caractérisé en ce que** chaque dispositif de retenue (4 ; 4¹, 4², 4³, 4⁴) comprend une première partie de tige rectiligne (41) et une partie flexible (42) reliées l'une à l'autre, chaque dispositif de retenue (4) étant fixé par la partie flexible (42) à un bord d'une ouverture (11) dans le cadre (10) de telle manière que deux dispositifs de retenue (4¹, 4²) soient dans une relation parallèle dans une première partie de bord (12a) de l'ouverture (11), et, respectivement, que deux dispositifs de retenue (4³, 4⁴) soient au niveau d'emplacements concordants dans une seconde partie de bord (12b) sur l'autre côté de l'ouverture, dans lequel les dispositifs de retenue parallèles (41, 42 ; 43, 44) sont reliés l'un à l'autre aux extrémités libres (411) des premières parties de tige (41 ; 41a, 41b) par un croisillon (45), et dans lequel la partie de tige (41) est dotée d'un nombre d'éléments de serrage saillants successifs (43 ; 43a) compatibles avec des contre-éléments de serrage (51 ; 51a, 51b) inclus dans les contre-dispositifs de retenue (5).

2. Elément de fixation selon la revendication 1, **caractérisé en ce que** les dispositifs de retenue (4) sont fixés par la partie flexible (42 ; 42b) à un bord (12) d'une ouverture (11) dans le cadre (10) à distance l'une de l'autre.

3. Elément de fixation selon la revendication 1 ou 2, **caractérisé en ce que** la partie flexible (42) comprend, en plus de la partie voûtée (42a), une seconde partie de tige rectiligne (42b), chaque dispositif de retenue étant ainsi un organe flexible en forme de U.

4. Elément de fixation selon la revendication 1 ou 2, **caractérisé en ce que** la première partie de tige rectiligne (41) et la partie flexible (42) forment un organe flexible en forme de J.

5. Elément de fixation selon l'une quelconque des revendications précédentes, **caractérisé en ce qu'**une ouverture (46) est disposée entre les parties de tige, ledit croisillon et ladite ouverture étant destinés à libérer les dispositifs de retenue des contre-dispositifs de retenue au moyen d'un outil.

6. Elément de fixation selon l'une quelconque des revendications précédentes, **caractérisé en ce que** la première partie de tige (41) des dispositifs de retenue (4 ; 4¹, 4², 4³, 4⁴) a son extrémité libre (411) dotée d'une saillie latérale (47), qui fait saillie du dispositif de retenue et de la première partie de tige dans un plan flexible (B-B).

7. Elément de fixation selon l'une quelconque des revendications précédentes, **caractérisé en ce que** l'élément de fixation (1) est doté d'axes de guidage (15), qui, dans le processus de mise en prise, sont conçus pour coïncider avec des évidements de guidage respectifs (222) dans l'ensemble boîtier de jonction.

8. Elément de fixation selon l'une quelconque des revendications précédentes, **caractérisé en ce que** l'élément de fixation (1) est doté de composants formant ressort (16).

9. Elément de fixation selon l'une quelconque des revendications précédentes, **caractérisé en ce que** l'élément de fixation (1) est relié à la plaque de couverture (11) de manière à constituer une entité intégrée.

10. Ensemble boîtier de jonction (2 ; 21, 22) comprenant des contre-dispositifs de retenue (5) pour fixer une plaque de couverture (13) au moyen d'un élément de fixation (1) pour la mettre en prise avec l'ensemble boîtier de jonction au moyen de dispositifs de retenue (4) inclus dans l'élément de fixation (1) et étant compatibles avec les contre-dispositifs de retenue (5), **caractérisé en ce que** chaque contredispositif de retenue (5 ; 5¹, 5², 5³, 5⁴) comprend une partie de support rectiligne (50), incluant en tant qu'élément de serrage (51) au moins une griffe de préhension (51a), ladite partie formant support (50) étant disposée dans une partie supérieure de l'ensemble boîtier de jonction (2), telle qu'un instrument électrique (22 ; 22a), et pour s'étendre vers le haut de celle-ci, et ladite griffe de préhension (51a) étant conçue pour s'étendre latéralement vers l'extérieur de la partie formant support, et dans lequel les contre-dispositifs de retenue (5) sont disposés respectivement sur un premier (220a) et un second côté (220b) de l'ensemble boîtier de jonction (2), tel que l'instrument électrique (22 ; 22a), deux en parallèle (51, 52 ; 53, 54) à distance l'un de l'autre de manière à venir se placer, dans le processus de fixation de la plaque de couverture (13), au niveau d'un bord d'une ouverture (11) dans un cadre (10) et de manière à coïncider avec les dispositifs de retenue parallèles de la plaque de couverture (41, 42 ; 43, 44), et en liaison avec les parties formant supports (50) des contre-dispositifs de retenue parallèles (51, 52 ; 53, 54), se trouve une paroi (6).

11. Ensemble boîtier de jonction selon la revendication 10, **caractérisé en ce que** les contre-dispositifs (5 ; 5¹, 5², 5³, 5⁴) sont disposés sur une vue en plan sur les côtés de l'ensemble boîtier de jonction (2), tels que l'instrument électrique (22 ; 22a), à distance les uns des autres de sorte à coïncider dans le processus de mise en prise avec les dispositifs de retenue respectifs (4 ; 4¹, 4²; 4³, 4⁴) de l'élément de fixation (1) et à s'emboîter à l'intérieur.

12. Ensemble boîtier de jonction selon l'une quelconque des revendications précédentes, **caractérisé en ce que** les contre-dispositifs de retenue parallèles (5¹, 5² ; 5³, 5⁴) sont fixés, de préférence intégrés, à la paroi (6) par leurs parties formant supports (50) sur l'une de ses longs côtés verticaux.

13. Système de fixation de la plaque de couverture, qui permet la fixation d'une plaque de couverture (13) à un ensemble boîtier de jonction (2), ledit système de fixation comprenant un élément de fixation (1) pour fixer la plaque de couverture (13) pour la mettre en prise avec l'ensemble boîtier de jonction (2), ledit élément de fixation (1) comprenant, en tant qu'organes de fixation, un certain nombre de dispositifs de retenue (4), au moyen desquels il doit être fixé à l'ensemble boîtier de jonction (2) et aux contre-dispositifs de retenue (5) prévus en liaison avec celui-ci, **caractérisé en ce que** l'élément de fixation (1), ainsi que ses dispositifs de retenue (4 ; 4¹, 4² ; 4³, 4⁴), est construit comme défini dans l'une quelconque des revendications 1 à 9 précédentes, et l'ensemble boîtier de jonction (2), en particulier ses contre-dispositifs de retenue (5 ; 5¹, 5²; 5³, 5⁴), est construit comme défini dans l'une quelconque des revendications 10 à 12 précédentes.

14. Procédé de libération de l'élément de fixation des revendications 1 à 9 de l'ensemble boîtier de jonction comprenant les revendications 10 à 13, **caractérisé en ce que** le procédé comprend
- l'utilisation d'un outil-levier contre le croisillon (47) pour amener la première partie de tige (41 ; 41a, 41b) à se libérer des contre-éléments de serrage (51 ; 51a).

15. Procédé selon la revendication 14, **caractérisé en ce que** l'outil est inséré dans l'ouverture (46) à l'intérieur de l'élément de fixation (1) pour faire levier.
